# EUROPÄISCHE PATENTSCHRIFT

(11) **EP 3 392 025 B1**
(45) Veröffentlichungstag und Bekanntmachung des Hinweises auf die Patenterteilung: **22.06.2022**
(21) Anmeldenummer: 17167392.4
(22) Anmeldetag: 20.04.2017
(51) Int. Cl.: B29C 65/34, F16L 47/03, F16L 47/34, B29L 23/00

(54) **HEIZELEMENTGEOMETRIE ZUR VERWENDUNG IN EINEM BOHRSATTEL**
HEATING ELEMENT GEOMETRY FOR USE IN A DRILL SADDLE
GÉOMÉTRIE D'ÉLÉMENT DE CHAUFFAGE DESTINÉ À ÊTRE UTILISÉ DANS UNE SELLE DE FORAGE

(43) Veröffentlichungstag der Anmeldung: 24.10.2018
(73) Patentinhaber: Georg Fischer Wavin AG, 8201 Schaffhausen (CH)
(72) Erfinder: Hüssy, Jonas, 8213 Neunkirch (CH); Petry, Dirk, 8245 Feuerthalen (CH); Hablützel, Edwin, 8200 Schaffhausen (CH)
(74) Vertreter: Fenner, Seraina

(56) Entgegenhaltungen:
- EP-A1- 0 565 397
- EP-A2- 2 048 426
- WO-A1-2005/106313
- CH-A5- 687 413
- DE-A1- 3 939 570
- DE-A1- 19 510 963
- DE-A1-102004 023 338
- JP-A- 2004 286 180

## Beschreibung

Heizelementgeometrie zur Verwendung in einem Anbohrsattel und Anbohrsattel für ein Medium förderndes Hauptrohr aus Kunststoff beinhaltend einen Stutzen mit einem Innengewinde, wobei der Stutzen eine Mittelachse aufweist, ein Sattelstück und vorzugsweise einen Bohrer, wobei der Bohrer vorzugsweise im Stutzen angeordnet ist und vorzugsweise mittels eines am Bohrer angeordneten Aussengewindes im Stutzen axial verschiebbar ist, wobei am Innendurchmesser des Sattelstücks eine Heizelementgeometrie vorzugsweise aus Draht angeordnet ist, die der Verschweissung des Anbohrsattels am Hauptrohraussenumfang dient, wobei die Heizelementgeometrie, eine Wicklung vorzugsweise aus Draht aufweist, wobei die Wicklung einen äusseren Wicklungsbereich und einen inneren Wicklungsbereich aufweist, wobei die Wicklung des inneren Wicklungsbereichs in mäanderförmigen Schlaufen entlang eines zur Mittelachse des Stutzens konzentrischen Kreises verläuft.

Anbohrsättel wie auch Rohranbohrarmaturen sind aus dem Stand der Technik bekannt und dienen dem Anschliessen einer Abzweigleitung an ein Hauptrohr. Die EP 0 679 831 A2 offenbart ein Verbindungsformteil zum Herstellen von Abzweiganschlüssen, wobei das darin verwendete Heizelement einen Wicklungsträger aufweist in dem der Widerstandsdraht in die im Wicklungsträger vorgesehen Rillen eingelegt und der Wicklungsträger dann im Verbindungsformteil stoffschlüssig eingebettet wird.

Diese Ausführung hat den Nachteil, dass im Bereich des Innendurchmessers des Rohrstutzens im Übergang zum Sattelstückinnendurchmesser eine Kaltzone durch den fehlenden Widerstandsdraht gebildet wird und diese bei Langzeitdruckverhalten als Schwachstelle gilt, da durch den Mediumsdruck eine Kraft auf den Sattel ausgeübt wird, der zum Abschälen des Sattels vom Rohr führt.

Um dem Abhilfe zu schaffen existieren Varianten, die die Kaltzone möglichst reduziert und dadurch die Schweisszone näher an den Innendurchmesser des Stutzens rückt, was den Nachteil mit sich bringt, dass diese Varianten zu unerwünschtem Draht- und Schmelzaustritt neigen.

Die EP 0 565 397 A1 offenbart ein Verfahren zur Herstellung eines Heizwiderstands zum Verschweissen von Kunststoffteilen. Die Heizwiderstände werden als Gitter oder auch als Gitter in Form eines zylindrischen Rohrstücks hergestellt und danach durch zusammendrücken der zylindrischen Form in eine abgeflachte, kragenförmig Form gebracht. Nachteilig hierbei ist, dass der Heizwiderstand nicht an einem Trägermaterial fixiert ist, so dass sich der Draht ungewollt zueinander verschiebt und das Kunststoffteil zu Drahtaustritt neigt.

Die CN 105299372A und JP 5832248 offenbaren ebenfalls Heizwicklungen für Anbohrsättel, die einen speziellen Wicklungsverlauf aufweisen. Nachteilig bei denen ist jedoch, dass sie im Zentrumsbereich eine grosse Kaltzone aufweisen und dies wie bereits erwähnt eine Schwachstelle bildet und sich dort die Verbindung gerne ablöst.

Die DE 195 10 963 A1 offenbart ein Heizelement zum Verbinden eines Rohres, wobei der Leiter in spiral- oder wendeiförmigen Windungen im Bereich der Kontaktfläche zum Rohr angeordnet ist.

Die EP 0 565 397 A1 offenbart verschiedene netzartige Anordnungen des Leiters.

Die JP 2004 286 180 offenbart einen Leiter der gegen die Mitte hin nur noch entlang Kreissegmenten verläuft.

Die DE 39 39 570 A1 offenbarte eine Anordnung des Leiters der sich über eine Länge hin und her windet und in der Mitte eine Aussparung vorsieht.

Die DE 10 2004 023 338 A1 offenbart eine spiralförmige Anordnung des Leiters, ebenfalls mit einer Aussparung im zentralen Bereich, wie auch die WO2005/106313 A1.

All diese Heizelemente, welche in einem Anbohrsattel angeordnet sind, bringen den Nachteil mit sich, dass die Verschweissung nicht optimal bis ans anzuschliessende Rohr durchgeführt wird und es dort dann schnell zu Lecks führen kann. Hierzu setzt die EP 2 048 426 A2 Mittel zum Verschliessen des Spalts im Bereich des Bohrers ein. Dies bedingt aber wiederum zusätzlicher Teile die auch vergessen werden können.

Es ist Aufgabe der Erfindung einen Anbohrsattel sowie ein Verfahren zum Anbohren und eine entsprechende Heizelementgeometrie vorzuschlagen, die die Kaltzone im Zentrum bzw. direkt anschliessend an die Bohrung eliminiert, ohne dass Draht- oder Schmelzaustritte entstehen, die eine Schwächung der Schweissung ergeben würden.

Diese Aufgabe wird erfindungsgemäss dadurch gelöst, dass die mäanderförmigen Schlaufen in den inneren Durchmesser des Stutzens hineinragen, wobei sie im Sattelstück angeordnet sind sowie dass bei der Heizelementgeometrie zur Verwendung im Anbohrsattel die mäanderförmigen Schlaufen radialverlaufende Wicklungsabschnitte aufweisen, die entlang eines konzentrisch zur Mittelachse angeordneten Kreises reihum angeordnet sind und durch Bögen vorzugsweise Radien miteinander verbunden sind.

Vorzugsweise ist die Wicklung auf einem Trägermaterial angeordnet.

Die mäanderförmigen Schlaufen ragen in den inneren Durchmesser des Stutzens hinein, wobei sie selbstverständlich im Sattelstück eingebettet sind. Die Schlaufen ragen so weit in den Bereich des Stutzens hinein, dass beim Anbohren der Bohrer den mäanderförmigen Heizelementbereich durchtrennt. Dadurch reicht der verschweisste Bereich bis ans Bohrloch heran. Selbstverständlich wurde der Schweissvorgang vor dem Anbohren durchgeführt damit der innere Wicklungsbereich bzw. die inneren Windungen der Wicklung während des Schweissvorgangs noch nicht durchtrennt sind.

Der erfindungsgemässe Anbohrsattel für ein Medium förderndes Hauptrohr aus Kunststoff beinhaltet einen Stutzen vorzugsweise mit Innengewinde das dem Bohrervorschub dient, wobei der Stutzen aber auch ohne Gewinde ausgeführt sein kann und z.B. mit einem externen Werkzeug bzw. Bohrer angebohrt werden kann. Selbstverständlich kann der Anbohrsattel auch einen Stutzen aufweisen auf den ein weiterer Stutzen adaptierbar ist, der ein Innengewinde und einen Bohrer mit entsprechendem Aussengewinde aufweist, was dann einem Anbohrsattel mit einem adaptierbaren Anbohr-T entspricht.

Der Stutzen weist eine Mittelachse auf, die auch der Mittelachse des Bohrers entspricht. Der Anbohrsattel weist zudem ein Sattelstück auf, wobei am Innendurchmesser des Sattelstücks eine Heizelementgeometrie angeordnet ist, der der Verschweissung am Hauptrohr dient. Der vorzugsweise im Stutzen angeordnete Bohrer weist ein Aussengewinde auf, das mit dem Innengewinde im Stutzen korrespondiert und sich dadurch der Bohrer axial verschieben lässt. Wie zuvor bereits erwähnt ist ein Anbohren des Anbohrsattels auch mittels eines externen Bohrers möglich.

Die Heizelementgeometrie weist vorzugsweise ein Trägermaterial auf und eine Wicklung. Das Trägermaterial ist vorzugsweise aus Polyethylen hergestellt.

Die Wicklung wird durch einen Draht gebildet, der entsprechend gewunden ist. Der Draht wird vorzugsweise durch Annähen, Einpressen oder Umwickeln von Nocken am Trägermaterial befestigt, kann jedoch auch eingepflügt werden und somit auch auf ein Trägermaterial verzichtet werden indem die Wicklung direkt in das Sattelstück eingepflügt wird. Die Wicklung weist einen inneren Bereich und einen äusseren Bereich auf, wobei der innere Wicklungsbereich in mäanderförmigen Schlaufen entlang eines zur Mittelachse des Stutzens konzentrischen Kreises verläuft. Die Beabstandungen der einzelnen Schlaufen zur Mittelachse sind jeweils identisch.

Vorzugsweise weisen die mäanderförmigen Schlaufen radial verlaufende Wicklungsabschnitte bzw. von der Mittelachse radial weg verlaufende Wicklungsabschnitte auf, die entlang eines konzentrisch zur Mittelachse angeordneten Kreises reihum angeordnet sind und durch Bögen, vorzugsweise Radien, miteinander verbunden sind. Die inneren Bögen bzw. Radien der mäanderförmigen Schlaufen sind vorzugsweise alle gleich weit zur Mittelachse beabstandet. Diese Anordnung des inneren Wicklungsbereichs dient der Aufhebung der inneren Kaltzone im angebohrten Zustand. Die mäanderförmigen Schlaufen, im geschlossenen Sattelstück eingebettet, ragen in den Bereich des Hohlraums des Stutzens hinein, so dass beim Durchbohren des Sattelstücks nicht nur durch den Kunststoff des Sattelstücks gebohrt wird, sondern der Bohrer sich auch durch die innere Wicklung bohrt bzw. die mäanderförmigen Schlaufen abtrennt. Dadurch kann eine innere Kaltzone, die direkt an den Stutzen anschliesst, vermieden werden.

Stattdessen grenzt die innere Wicklung direkt an den Stutzen an. Das Verschweissen erfolgt vor dem Durchbohren und gewährt durch die Anordnung ohne Kaltzone im Zentrum eine gute Verbindung zwischen Sattelstück und Hauptrohr ohne die Entstehung von Draht- oder Schmelzaustritt. Zudem kann auch das Ablösen des Sattelstücks vom Hauptrohr im inneren Bereich durch das Fehlen einer Kaltzone vermieden werden.

Vorzugsweise ist die äussere Wicklung um die innere Wicklung angeordnet und vorzugsweise aus demselben Draht gebildet. Als bevorzugte Ausführungsformen der äusseren Wicklung haben sich eine spiralförmige, mäanderförmige oder auch eine mehreckige Anordnung erwiesen.

In einer vorteilhaften Ausgestaltung durchtrennt der Bohrer beim Anbohren des Hauptrohres und des Sattelstücks den inneren Wicklungsbereich bzw. die mäanderförmigen Schlaufen, dadurch wird ermöglicht, dass im inneren Bereich des Sattelstücks, der direkt an den Stutzen anschliesst, keine Kaltzone direkt an den Stutzen anschliesst, wodurch der unerwünschte Effekt des Ablösens des Sattelstücks vom Hauptrohr vermieden werden kann.

Vorteilhaft ist es, wenn die Schnittkante des Bohrers die mäanderförmigen Schlaufen im Bereich der Wicklungsabschnitte durchtrennt. Durch diese Trennstelle werden ein Verhaken des Drahts mit dem Bohrer und so auch das Herausreissen des Drahts vermieden.

Zudem hat sich als vorteilhaft erwiesen, dass die Wicklungsabschnitte des mäanderförmig verlaufenden inneren Wirkungsbereichs rechtwinklig zur Schnittkante des Bohrers bzw. der entstandenen Schnittkante im Sattelstück gerichtet sind. Dies vermeidet, dass der Draht sich wie bereits erwähnt im Bohrer unerwünschter Weise verhakt.

Der äussere Wicklungsbereich der Wicklung kann spiralförmig, mehreckig oder mäanderförmig verlaufen, wobei auch andere Anordnungen denkbar sind. Vorzugsweise wir die Wicklung durch einen stetig verlaufenden Draht ohne Unterbrüche oder Verbindungsstellen gebildet.

Die erfindungsgemässe Heizelementgeometrie wird zur Verwendung in einem Anbohrsattel mit einem Stutzen, einer Mittelachse des Stutzens, einem Sattelstück, wobei die Heizelementgeometrie am Innendurchmesser des Sattelstücks angeordnet wird als Heizelement Verschweissung des Anbohrsattels (1) am Hauptrohraussenumfang eingesetzt. Die Heizelementgeometrie ist am Innendurchmesser des Sattelstücks angeordnet und dient der Verschweissung des Anbohrsattels mit dem Hauptrohr. Die Heizelementgeometrie weist eine Wicklung auf, wobei die Wicklung vorzugsweise aus einem Draht gebildet wird. Als bevorzugte Ausführungsform hat sich gezeigt wenn die Heizelementgeometrie ein Trägermaterial aufweist.

Das Trägermaterial ist vorzugsweise aus dem gleichen Material wie das Sattelstück, z.B. Polyethylen hergestellt.

Die Wicklung weist einen inneren und äusseren Bereich auf, wobei die Wicklung des inneren Wicklungsbereichs in mäanderförmigen Schlaufen entlang eines zur Mittelachse des Stutzens konzentrischen Kreises verläuft.

Die mäanderförmigen Schlaufen weisen vorzugsweise radialverlaufende Wicklungsabschnitte auf, die entlang eines konzentrisch zur Mittelachse angeordneten Kreises reihum angeordnet sind und durch Bögen vorzugsweise Radien miteinander verbunden sind.

Um die Befestigung der Wicklung auf dem Trägermaterial zu sichern und ein Verschieben des Drahtes zu vermeiden ist es vorteilhaft, wenn die Wicklung auf dem Trägermaterial festgenäht ist, wobei der Draht durch das Festnähen dennoch die Möglichkeit der Ausdehnung bei der Erwärmung erhält, wobei auch andere Befestigungsarten denkbar sind.

Vorzugsweise weist die Wicklung eine mäanderförmigen Anordnung des Drahts im inneren Wicklungsbereich auf und eine spiralförmige, mäanderförmige oder auch mehreckige Anordnung des Drahtes im äusseren Wicklungsbereich.

Das erfindungsgemässe Verfahren zum Anbohren eines Medium fördernden Hauptrohres aus Kunststoff, beinhaltet die folgenden Schritte:
Positionieren eines Anbohrsattels am Aussenumfang des Hauptrohres,
verschweissen des Anbohrsattels am Aussenumfang des Hauptrohres, wobei die Verschweissung mittels Erwärmen der Heizelementgeometrie durchgeführt wird,
durchbohren des Sattelstücks des Anbohrsattels und anbohren des Hauptrohres,
wobei das Anbohren durch die im Sattelstück angeordnete Heizelementgeometrie hindurch erfolgt, wobei vorzugsweise durch den inneren Wicklungsbereich gebohrt und der Draht durchtrennt wird.

Die Bohrung kann mittels eines externen Bohrers wie auch mittels eines im Stutzen angeordneten Bohrers durchgeführt werden.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Schnittansicht eines erfindungsgemässen Anbohrsattels,
- Fig. 2: eine erfindungsgemässe Heizelementgeometrie mit einer spiralförmigen Anordnung im äusseren Bereich,
- Fig. 3: eine erfindungsgemässe Heizelementgeometrie mit einer mäanderförmigen Anordnung im äusseren Bereich und
- Fig. 4: eine erfindungsgemässe Heizelementgeometrie mit einer mehreckigen Anordnung im äusseren Bereich,
- Fig. 5: einen Teilschnitt eines aus dem Stand der Technik bekannten Anbohrstutzens , verschweisst und angebohrt
- Fig.6: einen Teilschnitt eines erfindungsgemässen Anbohrstutzens, verschweisst und angebohrt.

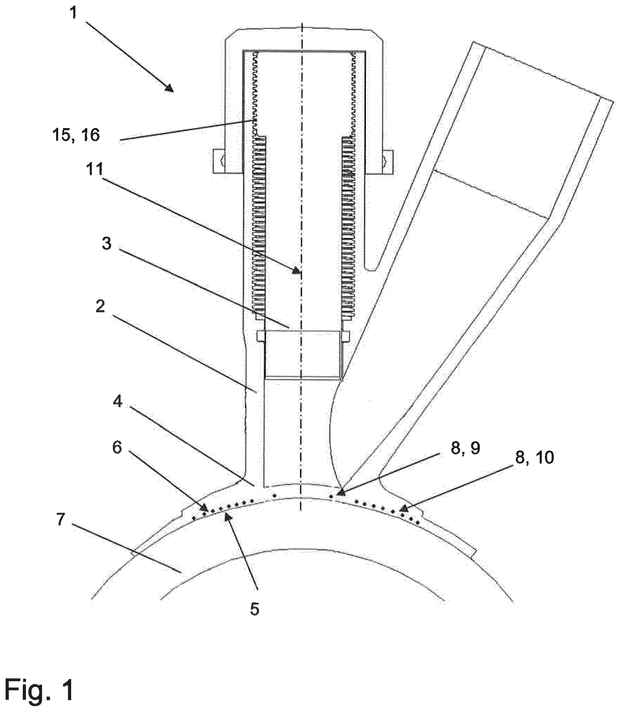

Die in Fig. 1 dargestellte Zeichnung zeigt einen erfindungsgemässen Anbohrsattel 1 für ein Medium förderndes Hauptrohr aus Kunststoff in Schnittansicht. Der Anbohrsattel 1 beinhaltet einen Stutzen 2 mit einer Mittelachse 11 in dem ein Bohrer 3 angeordnet ist, wobei der Anbohrsattel 1 auch einen Stutzen aufweisen kann an den ein weiterer Stutzen der den Bohrer beinhaltet adaptierbar ist bzw. ein Anbohr-T das am Anbohrsattel 1 befestigbar ist. Selbstverständlich ist auch ein externer Bohrer denkbar mit dem der Anbohrsattel durchbohrt werden kann, wobei diese Ausführungsform nicht abgebildet ist. Der Bohrer 3 weist vorzugsweise ein Aussengewinde 16 auf, das mit dem Innengewinde 15 im Stutzen 2 korrespondiert und wodurch sich der Bohrer 3 axial verstellen lässt. Der Anbohrsattel 1 weist ein Sattelstück 4 auf, das auf dem Hauptrohr 7 angeordnet wird. Im Innendurchmesser 5 des Sattelstücks 4 ist eine Heizelementgeometrie 6 angeordnet, die der Verschweissung des Anbohrsattels 1 mit dem Hauptrohr 7 dient. In der dargestellten Ausführung in Fig. 1 wurde das Anbohren noch nicht durchgeführt, da noch ersichtlich ist, dass das Sattelstück 4 noch keinen offenen Durchgang zum Stutzen 2 aufweist. Dadurch ist auch gut ersichtlich, dass sich der Draht der Wicklung 8 bzw. des inneren Wicklungsbereichs 9 in den inneren Bereich des Stutzens 2 erstreckt. Beim Anbohren des verschweissten Sattelstücks 4 und Hauptrohres 7 wird dann durch den inneren Wicklungsbereich 9, der mäanderförmig ausgebildet ist, durchgebohrt, wodurch sich die Wicklung 8 der Heizelementgeometrie 6 bzw. die verschweisste Zone 18 bis an die durch das Anbohren entstandene zylindrische Öffnung heran reicht und dadurch keine Kaltzone im Inneren entsteht.

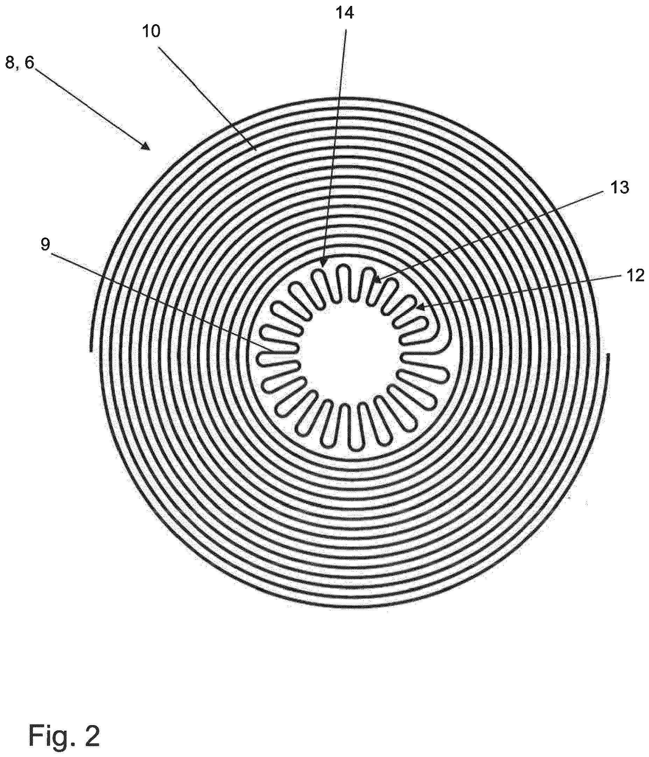

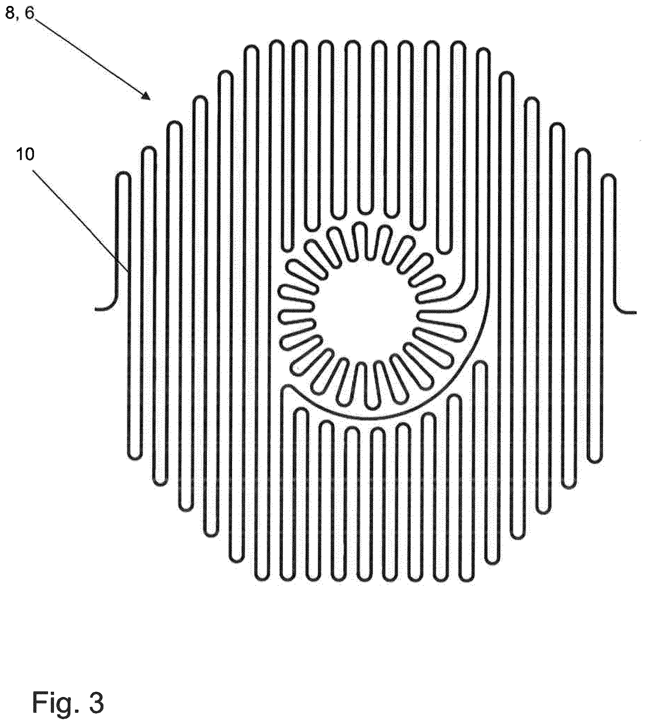

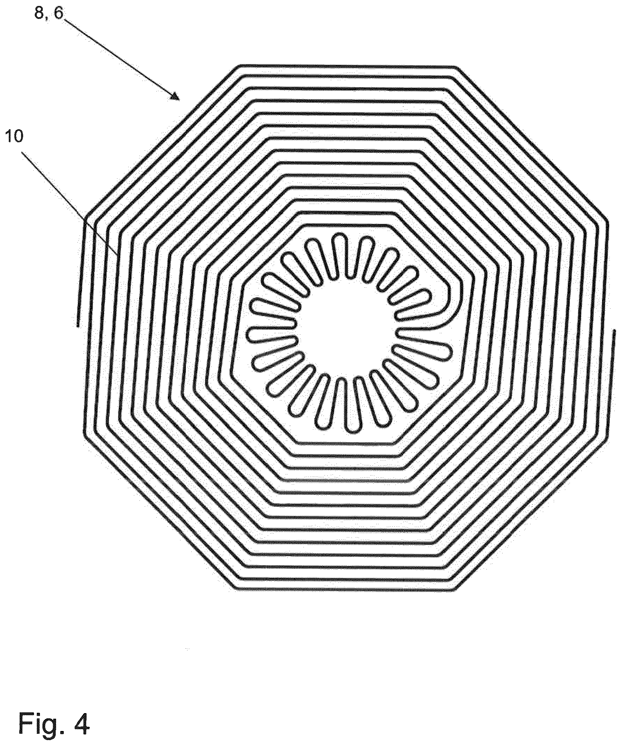

Fig. 2 zeigt eine mögliche Anordnung einer Wicklung 8 einer Heizelementgeometrie 6. Die Wicklung ist vorzugsweise durch einen konstant verlaufenden Draht gebildet und weist vorzugsweise keine Unterbrüche auf. Die Wicklung 8 weist einen inneren und einen äusseren Wicklungsbereich 9, 10 auf, wobei diese eine unterschiedliche Anordnung aufweisen. Der innere Wicklungsbereich 9 weist eine mäanderförmige Wicklung auf, wobei die mäanderförmigen Schlaufen 12 entlang eines zur Mittelachse 11 konzentrischen Kreises angeordnet sind. Die Schlaufen 12 sind vorzugsweise regelmässig entlang eines konzentrisch zur Mittelachse 11 verlaufenden Kreises angeordnet. Die mäanderförmigen Schlaufen 12 weisen vorzugsweise radial gerichtete Wicklungsabschnitte 13 auf, die an ihren Enden über Bögen bzw. Radien 14 miteinander verbunden sind. Die inneren Bögen bzw. Radien 14 weisen vorzugsweise alle denselben Abstand zur Mittelachse 11 auf. Der Bohrer 3 durchtrennt beim Anbohren den inneren Wicklungsbereich 9 vorzugsweise durch die Wicklungsabschnitte 13, vorzugsweise haben die Wicklungsabschnitte der Wicklung 8, 9 eine rechtwinklige Ausrichtung auf den Bohrer wodurch ein ungewolltes Herausziehen des Drahts beim Anbohren vermieden werden kann. Der äussere Wicklungsbereich 10 kann unterschiedlich ausgebildet sein. In Fig. 2 ist eine Ausführungsform einer erfindungsgemässen Heizelementgeometrie 6 dargestellt, die eine spiralförmige Anordnung des äussern Wicklungsbereichs 10 aufweist. Fig. 3 und 4 zeigen weitere mögliche Anordnungen des äusseren Wicklungsbereichs 10 auf, wobei in Fig. 3 der Draht im äusseren Wicklungsbereich 10 mäanderförmig verläuft und in Fig. 4 der Draht des äussern Wicklungsbereichs 10 mehreckig angeordnet ist. Selbstverständlich sind auch noch andere Anordnungen des äusseren Wicklungsbereichs bzw. dessen Drahtverlaufs denkbar.

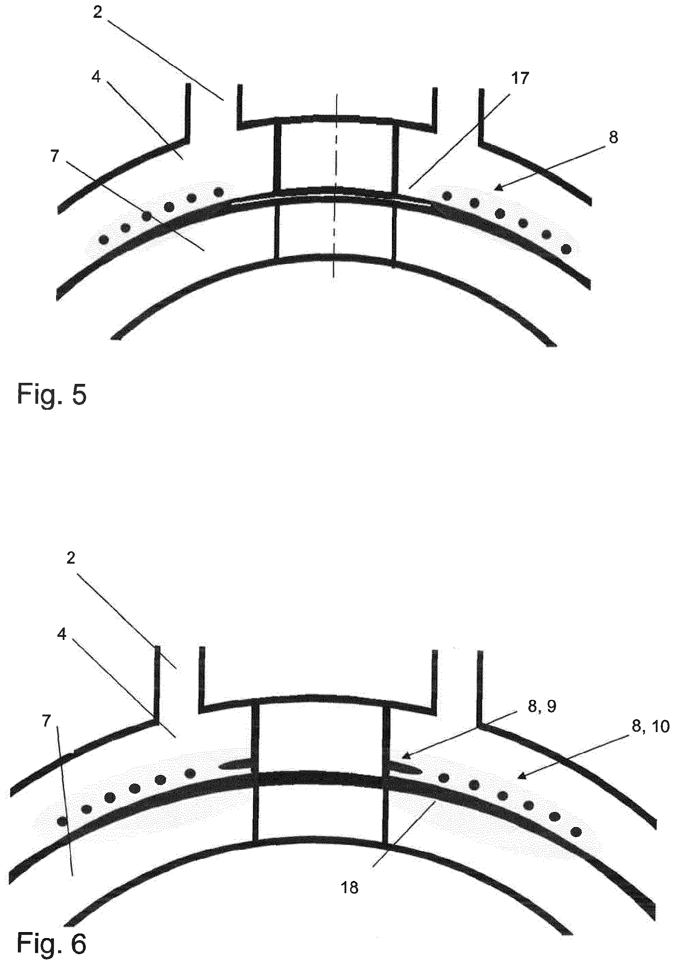

Fig. 5 und Fig. 6 zeigen Teilschnitte von Anbohrstutzen 1 die bereist mit dem Hauptrohr 7 verschweisst sind und bereits mit einem Bohrer angebohrt wurden. Fig. 5 zeigt einen aus dem Stand der Technik bekannten Anbohrstutzen bei dem gut ersichtlich ist, dass eine Kaltzone 17 direkt an die Bohrung zwischen Sattelstück 4 und Hauptrohr 7 vorliegt und so ein Ablösen des Sattelteils 4 vom Hauptrohr 7 eintreten kann.Fig. 6 zeigt die erfindungsgemässen Anbohrsattel 1, mit erfindungsgemässer Heizelementgeometrie 6 die im Sattelstück 4 eingebettet ist. Es ist gut ersichtlich, dass der innere Wicklungsbereich 9 der Wicklung 8 mit dem Bohrer durchtrennt wurde wodurch keine Kaltzone direkt an die Bohrung anschliesst sonderen eine Heizzone. Dies gewährleistet eine gute Verschweissung auch direkt im Randbereich der Bohrung bzw. im Bereich Sattelstück 4 unterhalbe des Stutzens 2 im Innenbereich. Die Verschweissung des Anbohrstutzens 1 mit dem Hauptrohr 7 wird selbstverständlich vor dem Anbohren durchgefürht damit der Draht der Heizelementgeometrie 6 erst nach der Verschweissung durchtrennt wird. In Fig. 6 ist gut ersichtlich, dass die Anbohrarmatur 1, durch das Vermeiden einer Kaltzone direkt an der Bohrung, sich nicht vom Hauptrohr ablöst.

### Bezugszeichenliste

- 1: Anbohrarmatur
- 2: Stutzen
- 3: Bohrer
- 4: Sattelstück
- 5: Innendurchmesser Sattelstück
- 6: Heizelementgeometrie
- 7: Hauptrohr
- 8: Wicklung
- 9: Innerer Wicklungsbereich
- 10: Äusserer Wicklungsbereich
- 11: Mittelachse
- 12: Schlaufe
- 13: Wicklungsabschnitt
- 14: Bogen, Radius
- 15: Innengewinde
- 16: Aussengewinde
- 17: Kaltzone
- 18: Verschweisste Zone

## Patentansprüche

1. Anbohrsattel (1) für ein Medium förderndes Hauptrohr (7) aus Kunststoff beinhaltend einen Stutzen (2) vorzugsweise mit einem Innengewinde (15), wobei der Stutzen (2) eine Mittelachse (11) aufweist, ein Sattelstück (4) und vorzugsweise einen Bohrer (3), wobei der Bohrer (3) vorzugsweise im Stutzen (2) angeordnet ist und vorzugsweise mittels eines am Bohrer (3) angeordneten Aussengewindes (16) im Stutzen (2) axial verschiebbar ist, wobei am Innendurchmesser (5) des Sattelstücks (4) eine Heizelementgeometrie (6) angeordnet ist, die der Verschweissung des Anbohrsattels (1) am Hauptrohraussenumfang dient, wobei die Heizelementgeometrie (6), eine Wicklung (8) vorzugsweise aus Draht aufweist, wobei die Wicklung (8) einen äusseren Wicklungsbereich (10) und einen inneren Wicklungsbereich (9) aufweist, wobei die Wicklung des inneren Wicklungsbereichs (9) in mäanderförmigen Schlaufen (12) entlang eines zur Mittelachse (11) des Stutzens (2) konzentrischen Kreises verläuft **dadurch gekennzeichnet, dass** die mäanderförmigen Schlaufen (12) in den inneren Durchmesser (5) des Stutzens (2) hineinragen, wobei sie im Sattelstück (4) angeordnet sind.

2. Anbohrsattel (1) nach Anspruch 1, **dadurch gekennzeichnet, dass** die Heizelementgeometrie (6) ein Trägermaterial aufweist, wobei die Wicklung (8) vorzugsweise auf dem Trägermaterial angeordnet ist.

3. Anbohrsattel (1) nach einem der Ansprüche 1 oder 2, **dadurch gekennzeichnet, dass** die mäanderförmigen Schlaufen (12) radialverlaufende Wicklungsabschnitte (13) aufweisen, die entlang eines konzentrisch zur Mittelachse (11) angeordneten Kreises reihum angeordnet sind und durch Bögen (14) vorzugsweise Radien miteinander verbunden sind.

4. Anbohrsattel (1) nach einem der Ansprüche 1 bis 3, **dadurch gekennzeichnet, dass** die Wicklung (8) des äusseren Wicklungsbereichs (10) spiralförmig, mehreckig oder mäanderförmig verläuft.

5. Anbohrsattel (1) nach einem der vorangehenden Ansprüche **dadurch gekennzeichnet, dass** die Wicklungsabschnitte (13) des mäanderförmig verlaufenden inneren Wicklungsbereichs (9) rechtwinklig zur Schnittkante des Bohrers (3) bzw. der entstandenen Schnittkante im Sattelstück (4) gerichtet sind.

6. Heizelementgeometrie (6) zur Verwendung in einem Anbohrsattel (1) mit einem Stutzen (2), einer Mittelachse (11) des Stutzens, einem Sattelstück (4), wobei die Heizelementgeometrie (6) am Innendurchmesser (5) des Sattelstücks (4) angeordnet wird, als Heizelement zur Verschweissung des Anbohrsattels (1) am Hauptrohraussenumfang, **dadurch gekennzeichnet, dass** die Heizelementgeometrie (6), eine Wicklung (8) vorzugsweise aus Draht aufweist, wobei die Wicklung (8) einen äusseren Wicklungsbereich (10) und einen inneren Wicklungsbereich (9) aufweist, wobei die Wicklung (8) des inneren Wicklungsbereichs (9) in mäanderförmigen Schlaufen (12) entlang eines zur Mittelachse (11) des Stutzens (2) konzentrischen Kreises verläuft, wobei die Mittelachse (11) des Stutzens der Mittelachse des inneren Wicklungsbereichs der als konzentrischer Kreis ausgebildet ist entspricht, **dadurch gekennzeichnet, dass** die mäanderförmigen Schlaufen (12) radialverlaufende Wicklungsabschnitte (13) aufweisen, die entlang eines konzentrisch zur Mittelachse (11) angeordneten Kreises reihum angeordnet sind und durch Bögen (14) vorzugsweise Radien miteinander verbunden sind.

7. Heizelementgeometrie (6) nach Anspruch 6, **dadurch gekennzeichnet, dass** die Heizelementgeometrie (6) ein Trägermaterial aufweist, wobei die Wicklung (8) vorzugsweise auf dem Trägermaterial angeordnet ist.

8. Heizelementgeometrie (6) nach Anspruch 6, **dadurch gekennzeichnet, dass** die Wicklung (8) im Sattelstück (4) befestigt ist

9. Heizelementgeometrie (6) nach Anspruch 6, **dadurch gekennzeichnet, dass** die Wicklung (8) auf dem Trägermaterial festgenäht ist.

10. Verfahren zum Anbohren eines Medium fördernden Hauptrohrs (7) aus Kunststoff, wobei das Verfahren folgende Schritte beinhaltet:
• Positionieren eines Anbohrsattels (1) nach einem der Ansprüche 1 bis 5 am Aussenumfang des Hauptrohres (7),
• Verschweissen des Anbohrsattels (1) am Aussenumfang des Hauptrohres (7),
• Anbohren des Hauptrohres (7) und durchbohren des Sattelstücks (4) des Anbohrsattels (1), wobei das Anbohren durch die im Sattelstück (4) angeordnete Heizelementgeometrie (6) erfolgt, wobei vorzugsweise durch den inneren Wicklungsbereich (9) der Wicklung (8) der Heizelementgeometrie (6) gebohrt und der Draht durchtrennt wird, **dadurch gekennzeichnet, dass** ein Bohrer (3) beim Anbohren des Hauptrohres (7) und des Sattelstücks (4) den inneren Wicklungsbereich (9) bzw. die mäanderförmigen Schlaufen (12) durchtrennt.

11. Verfahren nach Anspruch 10, **dadurch gekennzeichnet, dass** die Schnittkante des Bohrers (3) die mäanderförmigen Schlaufen (12) im Bereich der Wicklungsabschnitte (13) durchtrennt.

## Claims

1. Tapping saddle (1) for a plastic main pipe (7) carrying a medium, the saddle comprising a stub (2), preferably with an internal thread (15), wherein the stub (2) has a central axis (11), a saddle piece (4) and preferably a drill (3), wherein the drill (3) is preferably arranged in the stub (2) and is axially displaceable in the stub (2), preferably by means of an external thread (16) arranged on the drill (3), wherein a heating element geometry (6), which is used for welding the tapping saddle (1) to the main pipe outer circumference, is arranged on the inside diameter (5) of the saddle piece (4), wherein the heating element geometry (6) has a winding (8), preferably made of wire, wherein the winding (8) has an outer winding region (10) and an inner winding region (9), wherein the winding of the inner winding region (9) extends in meandering loops (12) along a circle concentric with the central axis (11) of the stub (2), **characterized in that** the meandering loops (12) project into the inside diameter (5) of the stub (2), wherein they are arranged in the saddle piece (4).

2. Tapping saddle (1) according to Claim 1, **characterized in that** the heating element geometry (6) has a support material, wherein the winding (8) is preferably arranged on the support material.

3. Tapping saddle (1) according to either of Claims 1 and 2, **characterized in that** the meandering loops (12) have radially extending winding sections (13) which are arranged in series along a circle arranged concentrically with the central axis (11) and are connected to one another by arms (14), preferably radii.

4. Tapping saddle (1) according to one of Claims 1 to 3, **characterized in that** the winding (8) of the outer winding region (10) extends in a spiral shape, polygonal shape or meandering shape.

5. Tapping saddle (1) according to one of the preceding claims, **characterized in that** the winding sections (13) of the meandering inner winding region (9) are oriented at right angles to the cutting edge of the drill (3) or of the cut edge of the saddle piece (4) .

6. Heating element geometry (6) for use in a tapping saddle (1) having a stub (2), a central axis (11) of the stub and a saddle piece (4), wherein the heating element geometry (6) is arranged on the inside diameter (5) of the saddle piece (4), as heating element for welding the tapping saddle (1) to the main pipe outer circumference, **characterized in that** the heating element geometry (6) has a winding (8), preferably made of wire, wherein the winding (8) has an outer winding region (10) and an inner winding region (9), wherein the winding (8) of the inner winding region (9) extends in meandering loops (12) along a circle concentric with the central axis (11) of the stub (2), wherein the central axis (11) of the stub corresponds to the central axis of the inner winding region which is formed as a concentric circle, **characterized in that** the meandering loops (12) have radially extending winding sections (13) which are arranged in series along a circle arranged concentrically with the central axis (11) and are connected to one another by arms (14), preferably radii.

7. Heating element geometry (6) according to Claim 6, **characterized in that** the heating element geometry (6) has a support material, wherein the winding (8) is preferably arranged on the support material.

8. Heating element geometry (6) according to Claim 6, **characterized in that** the winding (8) is secured in the saddle piece (4).

9. Heating element geometry (6) according to Claim 6, **characterized in that** the winding (8) is stitched firmly to the support material.

10. Method for tapping a plastic main pipe (7) carrying a medium, wherein the method comprises the following steps:
▪ positioning a tapping saddle (1) according to one of Claims 1 to 5 on the outer circumference of the main pipe (7),
▪ welding the tapping saddle (1) to the outer circumference of the main pipe (7),
▪ tapping the main pipe (7) and drilling through the saddle piece (4) of the tapping saddle (1), wherein tapping takes place through the heating element geometry (6) arranged in the saddle piece (4), wherein drilling is preferably through the inner winding region (9) of the winding (8) of the heating element geometry (6), and the wire is severed, **characterized in that** a drill (3) severs the inner winding region (9) or the meandering loops (12) as it taps the main pipe (7) and the saddle piece (4).

11. Method according to Claim 10, **characterized in that** the cutting edge of the drill (3) severs the meandering loops (12) in the region of the winding sections (13).

## Revendications

1. Selle de forage (1) pour un tube principal (7) en matière plastique transportant un fluide, contenant une tubulure (2) de préférence avec un filetage intérieur (15), la tubulure (2) présentant un axe central (11), une pièce de selle (4) et de préférence un foret (3), le foret (3) étant de préférence agencé dans la tubulure (2) et pouvant de préférence être déplacé axialement dans la tubulure (2) au moyen d'un filetage extérieur (16) agencé sur le foret (3), une géométrie d'élément chauffant (6) étant agencée sur le diamètre intérieur (5) de la pièce de selle (4), qui sert à souder la selle de forage (1) sur la périphérie extérieure du tube principal, la géométrie d'élément chauffant (6) présentant un enroulement (8), de préférence en fil, l'enroulement (8) présentant une zone d'enroulement extérieure (10) et une zone d'enroulement intérieure (9), l'enroulement de la zone d'enroulement intérieure (9) s'étendant en boucles en forme de méandre (12) le long d'un cercle concentrique à l'axe central (11) de la tubulure (2), **caractérisée en ce que** les boucles en forme de méandre (12) pénètrent dans le diamètre intérieur (5) de la tubulure (2), en étant agencées dans la pièce de selle (4).

2. Selle de forage (1) selon la revendication 1, **caractérisée en ce que** la géométrie d'élément chauffant (6) présente un matériau de support, l'enroulement (8) étant de préférence agencé sur le matériau de support.

3. Selle de forage (1) selon l'une quelconque des revendications 1 ou 2, **caractérisée en ce que** les boucles en forme de méandre (12) présentent des sections d'enroulement (13) s'étendant radialement, qui sont agencées en série le long d'un cercle agencé concentriquement à l'axe central (11) et qui sont reliées entre elles par des arcs (14), de préférence des rayons.

4. Selle de forage (1) selon l'une quelconque des revendications 1 à 3, **caractérisée en ce que** l'enroulement (8) de la zone d'enroulement extérieure (10) s'étend en forme de spirale, de polygone ou de méandre.

5. Selle de forage (1) selon l'une quelconque des revendications précédentes, **caractérisée en ce que** les sections d'enroulement (13) de la zone d'enroulement intérieure (9) s'étendant en forme de méandre sont orientées à angle droit de l'arête de coupe du foret (3) ou de l'arête de coupe obtenue dans la pièce de selle (4) .

6. Géométrie d'élément chauffant (6) pour utilisation dans une selle de forage (1) comprenant une tubulure (2), un axe central (11) de la tubulure, une pièce de selle (4), la géométrie d'élément chauffant (6) étant agencée sur le diamètre intérieur (5) de la pièce de selle (4), en tant qu'élément chauffant pour souder la selle de forage (1) sur la périphérie extérieure du tube principal, **caractérisée en ce que** la géométrie d'élément chauffant (6) présente un enroulement (8), de préférence en fil, l'enroulement (8) présentant une zone d'enroulement extérieure (10) et une zone d'enroulement intérieure (9), l'enroulement (8) de la zone d'enroulement intérieure (9) s'étendant en boucles en forme de méandre (12) le long d'un cercle concentrique à l'axe central (11) de la tubulure (2), l'axe central (11) de la tubulure correspondant à l'axe central de la zone d'enroulement intérieure qui est configurée sous forme de cercle concentrique, **caractérisée en ce que** les boucles en forme de méandre (12) présentent des sections d'enroulement (13) s'étendant radialement, qui sont agencées en série le long d'un cercle agencé concentriquement à l'axe central (11) et sont reliées entre elles par des arcs (14), de préférence des rayons.

7. Géométrie d'élément chauffant (6) selon la revendication 6, **caractérisée en ce que** la géométrie d'élément chauffant (6) présente un matériau de support, l'enroulement (8) étant de préférence agencé sur le matériau de support.

8. Géométrie d'élément chauffant (6) selon la revendication 6, **caractérisée en ce que** l'enroulement (8) est fixé dans la pièce de selle (4).

9. Géométrie d'élément chauffant (6) selon la revendication 6, **caractérisée en ce que** l'enroulement (8) est cousu sur le matériau de support.

10. Procédé de forage d'un tube principal (7) en matière plastique transportant un fluide, le procédé contenant les étapes suivantes :
- le positionnement d'une selle de forage (1) selon l'une quelconque des revendications 1 à 5 sur la périphérie extérieure du tube principal (7),
- le soudage de la selle de forage (1) sur la périphérie extérieure du tube principal (7),
- le forage du tube principal (7) et le forage à travers la pièce de selle (4) de la selle de forage (1), le forage étant effectué à travers la géométrie d'élément chauffant (6) agencée dans la pièce de selle (4), de préférence à travers la zone d'enroulement intérieure (9) de l'enroulement (8) de la géométrie d'élément chauffant (6) et le fil étant sectionné,
**caractérisé en ce qu'**un foret (3), lors du forage du tube principal (7) et de la pièce de selle (4), sectionne la zone d'enroulement intérieure (9) ou les boucles en forme de méandre (12).

11. Procédé selon la revendication 10, **caractérisé en ce que** l'arête de coupe du foret (3) sectionne les boucles en forme de méandre (12) dans la zone des sections d'enroulement (13).
